# EUROPEAN PATENT APPLICATION

(11) **EP 4 567 310 A1**
(43) Date of publication of application: **11.06.2025**
(21) Application number: 24212967.4
(22) Date of filing: 14.11.2024
(51) Int. Cl.: F16K 3/08, F16K 11/087, F16K 11/16

(54) **THREE-WAY VALVE, PARTICULARLY OF THE TYPE WITH A MODULATING FUNCTION**

(30) Priority: 05.12.2023 IT 202300025914
(71) Applicant: RUBINETTERIE BRESCIANE BONOMI SPA, 25064 Gussago (BS) (IT)
(72) Inventor: BONOMI, Aldo, 25065 LUMEZZANE BS (IT)
(74) Representative: Modiano, Micaela Nadia

(57) **Abstract**

A three-way valve (1), particularly of the type with a modulating function, comprising a valve body (2) having a substantially cruciform configuration and forming:
- a first inlet (3), which is oriented substantially along a first axis (4) that passes through the valve body (2) and is adapted to be connected to a first delivery pipe of a first fluid;
- a second inlet (5), which is oriented substantially along a second axis (6) that passes through the valve body (2) substantially at right angles to the first axis (4) and is adapted to be connected to a second delivery pipe of a second fluid;
- an outlet (7), which is oriented along the first axis (4) in a manner that is opposite with respect to the first inlet (3); and
- a receptacle (8), which is formed and extended along the second axis (6) in a manner that is opposite with respect to the second inlet (5);

means (9) for controlling and/or blocking the flows of the fluids are furthermore provided and are accommodated internally and substantially centrally to the valve body (2), and means (10) for activating the flow control and/or blocking means (9) are furthermore provided and accommodated in the receptacle (8);
the control and/or blocking means (9) can be switched by virtue of the activation means (10) between a first configuration, in which the first inlet (3) and the outlet (7) are completely free and in which the second inlet (5) is completely blocked, and a second configuration, in which the second inlet (5) and the outlet (7) are completely free and in which the first inlet (3) is completely blocked, passing through a plurality of intermediate configurations in which the inlets (3, 5) are partially blocked with the outlet (7) completely free.

## Description

The present invention relates to a three-way valve, particularly of the type with a modulating function.

In the field of hydraulics, it is known to use three-way globe valves which have the purpose of regulating the flow rate of a first fluid by mixing it with a second fluid in a controlled manner.

Such globe valves of the known type are not free from drawbacks, which include the fact that they are structurally complex, thus expensive, and still are unable to have high accuracy in mixing modulation.

Moreover, because of the way in which they are designed, the flow rate of the second fluid cannot be optimally controlled.

The aim of the present invention is to provide a valve that is alternative to the globe valve of the known type that is capable of obviating the drawbacks of the known type.

Within this aim, an object of the present invention is to provide a valve capable of optimally regulating the flow rate or pressure of a first fluid, optionally mixing it with a second fluid.

Another object of the present invention is to provide a valve that can be easily modulated and is constructively simple.

A further object of the present invention is to provide a valve capable of giving the greatest assurances of reliability, efficiencies and operation.

This aim, as well as these and other objects that will become better apparent hereinafter, are achieved by a three-way valve, particularly of the type with a modulating function, comprising a valve body with a substantially cruciform configuration so as to form:
- a first inlet, which is substantially oriented along a first axis that passes through said valve body and is adapted to be connected to a first delivery pipe of a first fluid;
- a second inlet, which is oriented substantially along a second axis that passes through said valve body substantially at right angles to said first axis and is adapted to be connected to a second delivery pipe of a second fluid;
- an outlet, which is oriented along said first axis in a manner that is opposite with respect to said first inlet and
- a receptacle, which is formed and extended along said second axis in a manner that is opposite with respect to said second inlet;

means for controlling and/or blocking the flows of said fluids being furthermore comprised and being accommodated internally and substantially centrally to said valve body, and means for activating said flow control and/or blocking means being furthermore comprised and accommodated in said receptacle;
characterized in that said control and/or blocking means can be switched by virtue of said activation means between a first configuration, in which said first inlet and said outlet are completely free and in which said second inlet is completely blocked, and a second configuration, in which said second inlet and said outlet are completely free and in which said first inlet is completely blocked, passing through a plurality of intermediate configurations in which said inlets are partially blocked with said outlet completely free.

Further characteristics and advantages of the invention will become better apparent from the description of a preferred, but not exclusive, embodiment of a three-way valve, particularly of the type with a modulating function, illustrated by way of non-limiting example with the aid of the accompanying drawings, wherein:

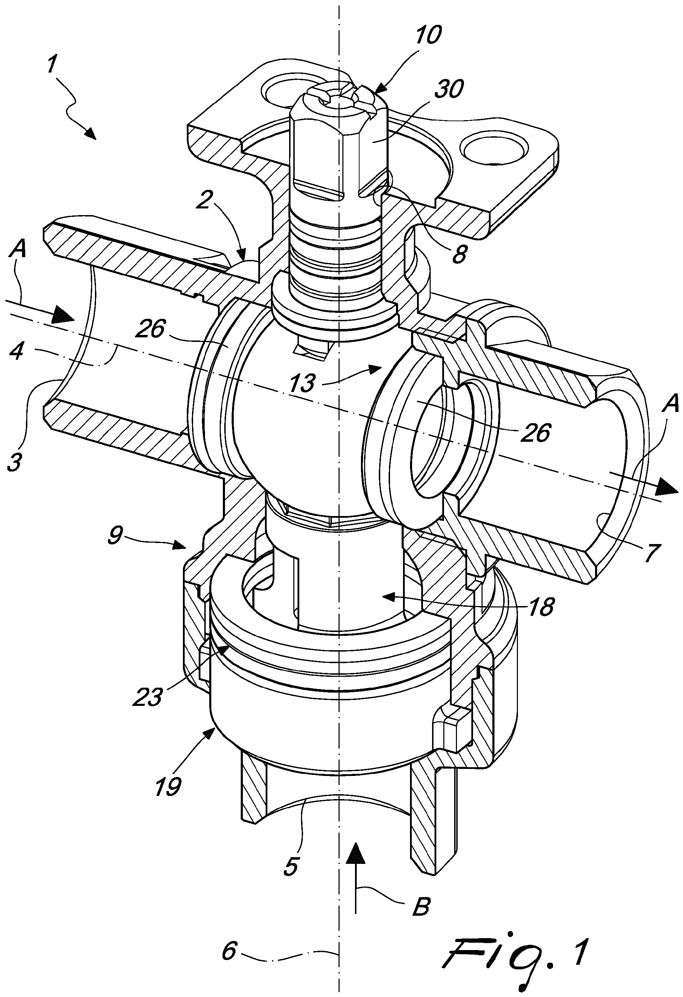

Figure 1 is a partially sectional perspective view of the valve according to the invention;

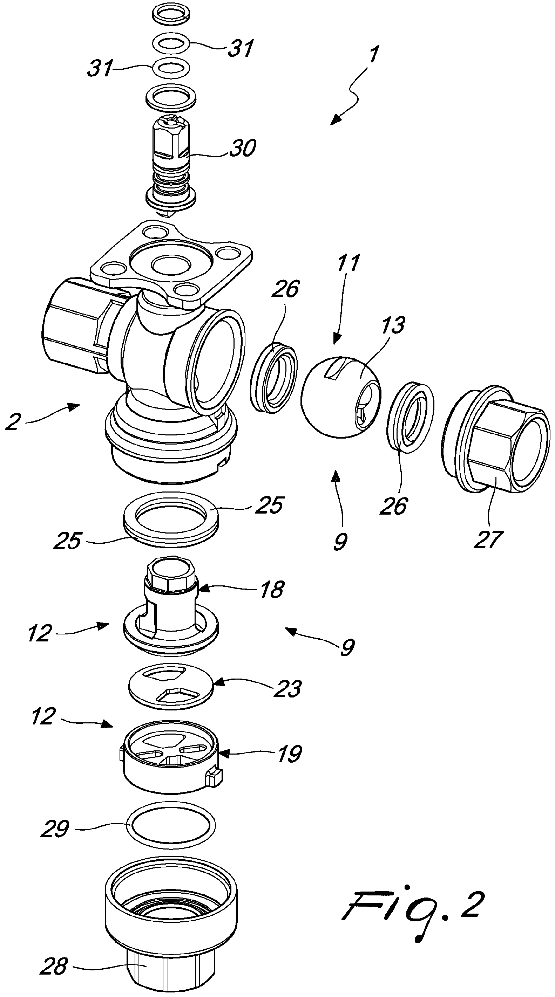

Figure 2 is an exploded perspective view of the valve shown in Figure 1;
Figure 3 is an exploded perspective view of only the flow control and/or blocking means of the valve shown in the preceding figures;
Figures 4 and 5 are, respectively, a plan view from below and a sectional view of the valve shown in the preceding figures in its first configuration;
Figures 6 and 7 are, respectively, a plan view from below and a sectional view of the valve shown in the preceding figures in its second configuration;
Figures 8 and 9 are, respectively, a plan view from below and a sectional view of the valve shown in the preceding figures in a configuration which is intermediate between the previous configurations shown.

With reference to the figures, the three-way valve, particularly of the type with a modulating function, generally designated by the reference numeral 1, comprises a valve body 2 having a substantially cruciform configuration so as to form:
- a first inlet 3, which is oriented substantially along a first axis 4 that passes through the valve body 2 and is adapted to be connected to a first delivery pipe of a first fluid "A";
- a second inlet 5, which is oriented substantially along a second axis 6 that passes through the valve body 2 substantially at right angles to the first axis 4 and is adapted to be connected to a second delivery pipe of a second fluid "B";
- an outlet 7, which is oriented along the first axis 4 in a manner that is opposite with respect to the first inlet 3 and
- a receptacle 8, which is formed and extended along the second axis 6 in a manner that is opposite with respect to the second inlet 5.

To complete the valve 1 there are furthermore means 9 for controlling and/or blocking the flows of the fluids "A" and "B" which are accommodated internally and substantially centrally to the valve body 2, and means 10 for activating the flow control and/or blocking means 9, accommodated in the receptacle 8.

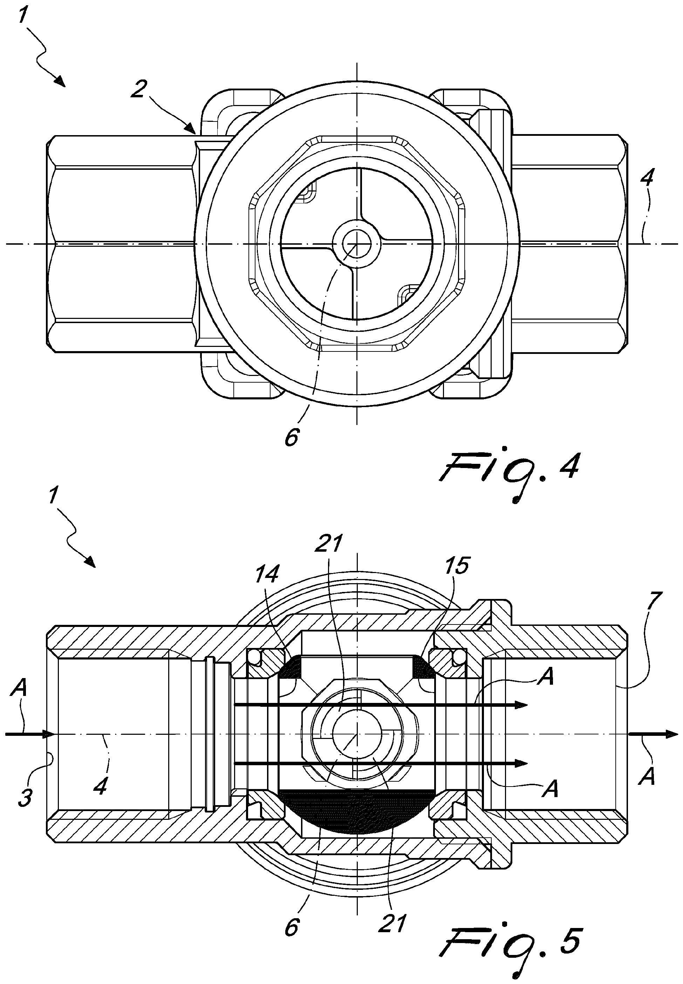

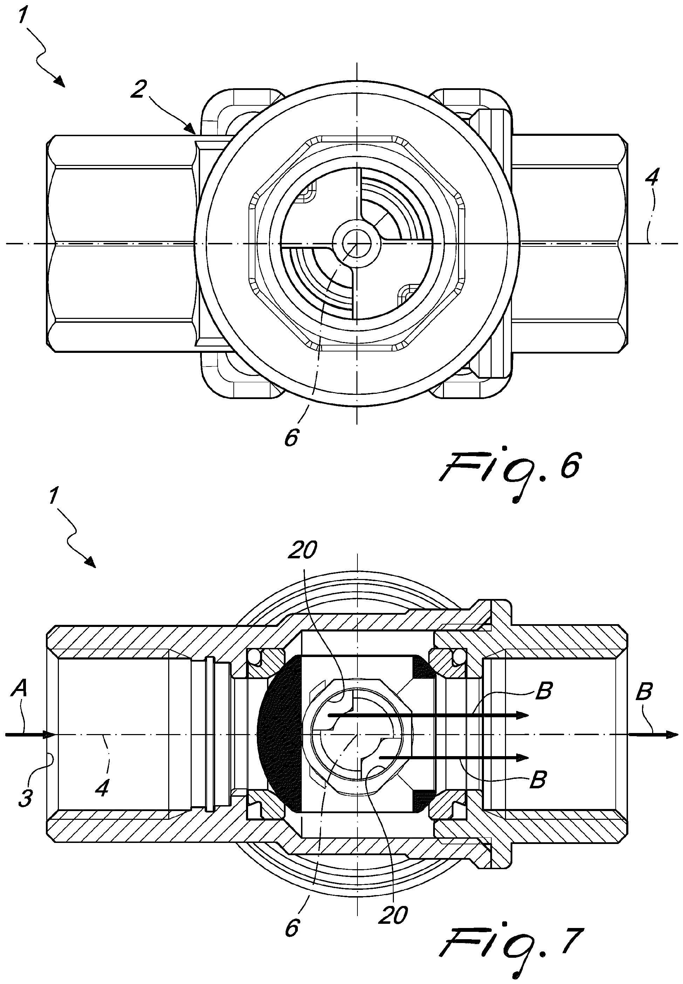

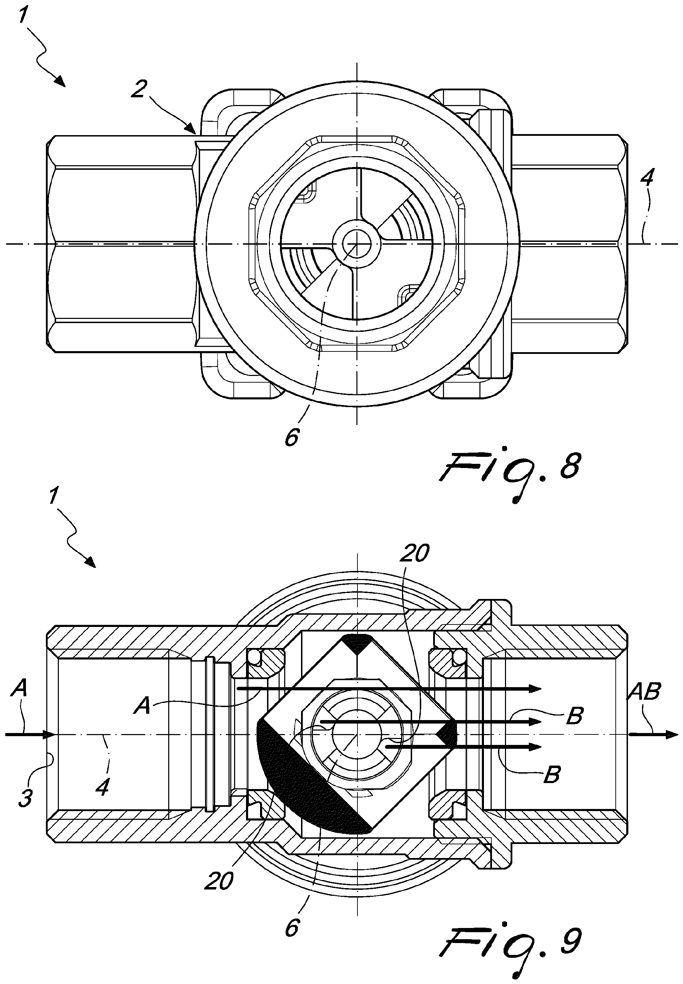

According to the invention, the control and/or blocking means 9 can be switched by virtue of the activation means 10 between a first configuration, shown in Figures 4 and 5, and a second configuration, shown in Figures 6 and 7, passing through a plurality of intermediate configurations, such as the one shown in Figures 8 and 9, in which the inlets 3 and 5 are partially blocked with the outlet 7 completely free.

As will be better described hereinafter, in the first configuration the first inlet 3 and the outlet 7 are completely free, with the second inlet 5 completely blocked.

Conversely, in the second configuration the second inlet 6 and the outlet 7 are completely free with the first inlet 3 completely blocked.

Advantageously, in the proposed embodiment the flow control and/or blocking means 9 comprise:
- a first flow control element 11, which is movable gradually and continuously by means of the actuation of the activation means 10 so as to affect the flow of the first fluid "A" that arrives from the first inlet 3;
- a second flow control element 12, which is movable gradually and continuously by means of the actuation of the activation means 10 so as to affect the flow of the second fluid "B" that arrives from the second inlet 5.

More specifically, the first flow control element 11 is directly associated with the activation means 10 and the second flow control element 12 is associated with the activation means 10 by means of the first flow control element 11.

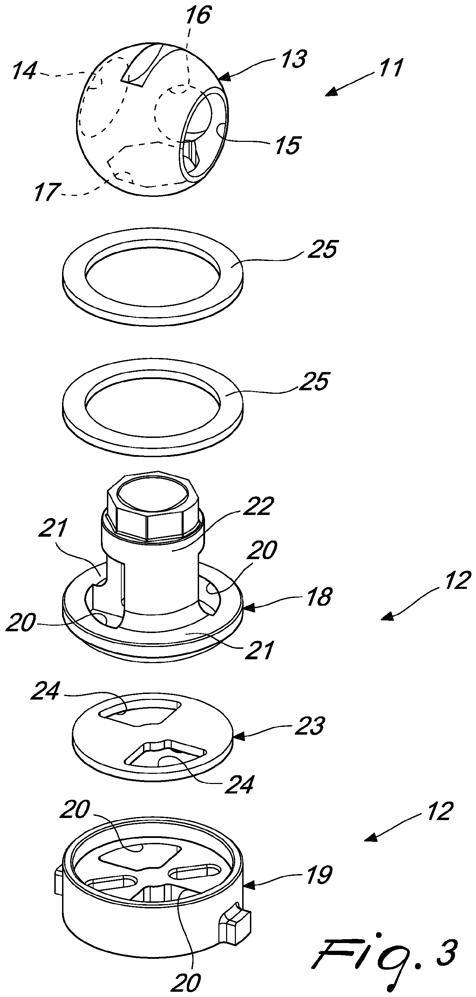

With reference to Figure 3, the first flow control element 11 comprises a hollow sphere 13 which is rotatably and centrally accommodated in the valve body 2 at the intersection of the axes 4 and 6.

Such hollow sphere 13 is directly associated with the activation means 10 for its rotation about the second axis 6 by virtue of a first shape mating and has three openings 14, 15 and 16 formed on planes which are parallel to the second axis 6, two of which are mutually opposite and a third of which is perpendicular to two other ones, so as to connect the first inlet 3 to the outlet 7, in the first configuration, and completely obstruct the first inlet 3, with the only blind side, leaving its interior in communication with the outlet 7, in the second configuration, as a result of a substantially 90° rotation thereof about the second axis 6 with respect to the first configuration.

Advantageously, the hollow sphere 13 has a fourth opening 17 formed oppositely with respect to the activation means 10 at right angles to the second axis 6 in the direction of the second inlet 5.

Again with particular reference to Figure 3, the second flow control element 12 comprises:
- a movable part, which is constituted by a first perforated disk 18 transversely arranged with respect to the second inlet 5 at right angles to the second axis 6 and is integral with the hollow sphere 13 in rotation, and
- a fixed part, which is constituted by a second perforated disk 19 which is adjacent to the first perforated disk 18, is arranged transversely with respect to the second inlet 5 at right angles to the second axis 6, and is integral with the valve body 2.

In greater detail, each perforated disk 18 and 19 has petal-like passage openings 20 and solid portions 21 which are mutually complementary, with the first perforated disk 18 being movable with respect to the second perforated disk 19 from a position that corresponds to the first configuration, in which the passage openings 20 of the second perforated disk 19 are obstructed by the solid portions 21 of the first perforated disk 18, to another position that corresponds to the second configuration, in which the passage openings 20 of the perforated disks 18 and 19 are mutually aligned for the passage of the second fluid "B" through the second flow control element 12.

Conveniently, the first perforated disk 18 has a hollow tang 22 for connection to the hollow sphere 13, by means of a shape mating with the fourth opening 17, and communicates with the passage openings 20 so as to allow the flow of the second fluid "B" that arrives from the second inlet 5 into the hollow sphere 13 as a result of the alignment of the passage openings 20 of the perforated discs 18 and 19, in said second configuration, or as a result of the partial alignment of the passage openings 20 of the perforated disks 18 and 19, in one of the intermediate configurations.

In order to ensure an adequate hermetic seal, a contoured gasket 23 is interposed between the perforated disks 18 and 19, also has similar passage openings 24 and is integral at least in rotation with the second perforated disk 19.

In order to allow the free rotation of the second flow control element 12 with respect to the valve body 2, a pair of anti-friction disks 25 is fitted on the hollow connecting tang 22 and interposed between the first perforated disk 18 and the valve body 2.

Likewise, in order to allow the free rotation of the first flow control element 11 with respect to the valve body 2, there are two centering bushings 26 accommodated at the first inlet 3 and at the outlet 7, respectively, so as to be interposed between the hollow ball 13 and the valve body 2.

Conveniently, the valve body 2 comprises a first shut-off fitting 27 of the type that is removable by means of a threaded coupling, at the outlet 7, so as to allow the hollow sphere 13 and the centering bushings 27 to be inserted in the valve body 2.

Equally conveniently, the valve body 2 comprises a second shut-off fitting 28 of the type that is removable by means of a threaded coupling and is provided with an O-ring 29, at the second inlet 5, so as to allow the insertion of the anti-friction disks 25, of the perforated disks 18 and 19, and of the contoured gasket 23 in the valve body 2.

Finally, the activation means 10 comprise an actuation rod 30 which is fitted on the hollow sphere 13 on the opposite side with respect to the fourth opening 17 by means of a shape mating.

Conveniently, the actuation rod 30 is integral in rotation with the hollow sphere 13 about the first axis 4 and is associable with a control lever or an actuator, and one or more sealing O-rings 31 are provided between the actuation rod 20 and the valve body 2.

The operation of the valve 1 according to the present invention can be easily understood from what has just been described.

In greater detail, with reference to Figures 4 and 5, in the first configuration the first fluid "A" can flow through the mutually opposite openings 14 and 15 of the hollow sphere 13 from the first inlet 3 to the outlet 7.

Differently, the second fluid "B" is here completely blocked by the solid portions 21 of the first perforated disk 18, which blocks the passage openings 20 of the second perforated disk 19.

In this case, the fluid that exits from the valve 1 is constituted only by the first fluid "A" with a substantially unchanged flow rate.

With reference to Figures 8 and 9, starting from the first configuration and following a clockwise rotation (looking at said figures) of the actuation rod 20, both the hollow sphere 13 and the first perforated disk 18 perform a clockwise rotation, respectively gradually reducing the flow rate of the first fluid "A" and opening, and thus gradually increasing, the flow rate of the second fluid "B".

In this case, the fluid that exits from the valve 1 is constituted by both the first fluid "A" and the second fluid "B" with a percentage that is variable according to the degree of valve opening and with a total flow rate given by the sum of the two flow rates of the two circulating fluids "A" and "B".

With reference to Figures 6 and 7, continuing with the rotation of the actuation rod 30 until a rotation substantially equal to 90° is reached, the second configuration is reached.

In this second configuration, the second fluid "B" can flow through the passage openings 20, through the hollow connecting tang 22 and through the hollow sphere 13, passing from the second inlet 5 to the outlet 7 through the third opening 16 of the hollow sphere 13.

Differently, the first fluid "A" is here completely blocked by the solid portion of the hollow sphere 13 that blocks the first inlet 3.

In this case, the fluid that exits from the valve 1 is constituted only by the second fluid "B" with a substantially unchanged flow rate.

In practice it has been found that the three-way valve, according to the present invention, achieves the intended aim and objects, since it is capable of being switched, allowing to vary the flow rate of the two fluids linearly from 0 to 100% in a mutually opposite manner.

The three-way valve thus conceived is susceptible of numerous modifications and variations, all of which are within the scope of the accompanying claims.

All the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102023000025914 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A three-way valve (1), particularly of the type with a modulating function, comprising a valve body (2) having a substantially cruciform configuration so as to form:
- a first inlet (3), which is oriented substantially along a first axis (4) that passes through said valve body (2) and is adapted to be connected to a first delivery pipe of a first fluid;
- a second inlet (5), which is oriented substantially along a second axis (6) that passes through said valve body (2) substantially at right angles to said first axis (4) and is adapted to be connected to a second delivery pipe of a second fluid;
- an outlet (7), which is oriented along said first axis (4) in a manner that is opposite with respect to said first inlet (3); and
- a receptacle (8), which is formed and extended along said second axis (6) in a manner that is opposite with respect to said second inlet (5);
means (9) for controlling and/or blocking the flows of said fluids (A, B) being furthermore comprised and being accommodated internally and substantially centrally to said valve body (2), and means (10) for activating said flow control and/or blocking means (9) being furthermore comprised and being accommodated in said receptacle (8);
**characterized in that** said control and/or blocking means (9) can be switched by virtue of said activation means (10) between a first configuration, in which said first inlet (3) and said outlet (7) are completely free and in which said second inlet (5) is completely blocked, and a second configuration, in which said second inlet (5) and said outlet (7) are completely free and in which said first inlet (3) is completely blocked, passing through a plurality of intermediate configurations in which said inlets (3, 5) are partially blocked with said outlet (7) completely free.

2. The valve (1) according to claim 1, **characterized in that** said control and/or blocking means (9) comprise:
- a first flow control element (11), which can move gradually and continuously by means of the actuation of said activation means (10) so as to affect the flow of said first fluid that arrives from said first inlet (3);
- a second flow control element (12), which can move gradually and continuously by means of the actuation of said activation means (10) so as to affect the flow of said second fluid that arrives from said second inlet (5);
said first flow control element (11) being directly associated with said activation means (10) and said second flow control element (12) being associated with said activation means (10) by virtue of said first flow control element (11).

3. The valve (1) according to claim 1 or 2, **characterized in that** said first flow control element (11) comprises a hollow sphere (13) which is accommodated rotatably and centrally in said valve body (2) at the intersection of said axes (4, 6); said hollow sphere (13) being directly associated with said activation means (10) for its rotation about said second axis (6) and having three openings (14, 15, 16) formed on planes which are parallel to said second axis (6), two of which are mutually opposite and a third of which is perpendicular to said mutually opposite openings (14, 15), so as to put said first inlet (3) in communication with said outlet (7) in said first configuration and so as to completely block said first inlet (3), leaving the interior of said hollow sphere (13) in communication with said outlet (7) in said second configuration as a result of a rotation thereof substantially through 90° about said second axis (6) with respect to said first configuration; said hollow sphere (13) having a fourth opening (17) formed on an opposite side with respect to said activation means (10) at right angles to said second axis (6) in the direction of said second inlet (5).

4. The valve (1) according to claim 3, **characterized in that** said second flow control element (12) comprises:
- a first perforated disk (18), which is arranged transversely with respect to said second inlet (5) at right angles to said second axis (6) and is integral in rotation with said hollow sphere (13), and
- a second perforated disk (19), which is adjacent to said first perforated disk (18), is arranged transversely with respect to said second inlet (5) at right angles to said second axis (6) and is integral with said valve body (2);
each one of said perforated disks (18, 19) having passage openings (20) and solid portions (21) which are mutually complementary; said first perforated disk (18) being movable with respect to said second perforated disk (19) from a position that corresponds to said first configuration, in which said passage openings (20) of said second perforated disk (19) are blocked by said solid portions (21) of said first perforated disk, to another position that corresponds to said second configuration, wherein said passage openings (20) of said perforated disks (18, 19) are aligned with each other for the passage of said second fluid through said second flow control element (12); said first perforated disk (18) having a hollow tang (22) for connection to said hollow sphere (13) and communicating with said passage openings (20) so as to allow the flow of said second fluid that arrives from said second inlet (5) within said hollow sphere (13) as a result of the alignment of said passage openings (20) of said perforated disks (18, 19), in said second configuration, or as a result of the partial alignment of said passage openings (20) of said perforated disks (18, 19), in one of said intermediate configurations.

5. The valve (1) according to one or more of the preceding claims, **characterized in that** it comprises a contoured gasket (23) which is interposed between said perforated disks (18, 19) and also has similar passage openings (24) and is integral at least in rotation with said second perforated disk (19).

6. The valve (1) according to one or more of the preceding claims, **characterized in that** it comprises a pair of anti-friction disks (25) fitted on said hollow connecting tang (22) and interposed between said first perforated disk (18) and said valve body (2).

7. The valve (1) according to one or more of the preceding claims, **characterized in that** it comprises two centering bushings (26) accommodated at said first inlet (3) and at said outlet (7), respectively, so as to be interposed between said hollow sphere (13) and said valve body (2).

8. The valve (1) according to one or more of the preceding claims, **characterized in that** said valve body (2) comprises a first shut-off fitting (27) of the removable type, at said outlet (7), so as to allow the insertion of said hollow sphere (13) and of said centering bushings (26) in said valve body (2).

9. The valve (1) according to one or more of the preceding claims, **characterized in that** said valve body (2) comprises a second shut-off fitting (28) of the removable type, at said second inlet (5), so as to allow the insertion of said anti-friction disks (25), said perforated disks (18, 19) and said contoured gasket (23) in said valve body (2).

10. The valve (1) according to one or more of the preceding claims, **characterized in that** said activation means (10) comprise an actuation rod (30) which is engaged in said hollow sphere (13) on the opposite side with respect to said fourth opening (17); said actuation rod (30) being integral in rotation with respect to said hollow sphere (13) about said first axis (4) and being associable with a control lever or an actuator.
